# EUROPEAN PATENT SPECIFICATION

(11) **EP 1 000 733 B1**
(45) Date of publication and mention of the grant of the patent: **10.09.2003**
(21) Application number: 98121746.6
(22) Date of filing: 16.11.1998
(51) Int. Cl.: B29D 30/48

(54) **Plant for the production and distribution of the rubber coated metallic rings with filler to the assembling unit of the tyres**
Anlage zum Herstellen und Abgeben von gummibeschichteten, metallischen, mit Wulstfüller versehenen Wulstkernringen zur Reifenaufbaueinrichtung
Installation de production et distribution d'anneaux métalliques enrobés de caoutchouc avec des éléments de remplissage vers l'unité de confection des pneus

(43) Date of publication of application: 17.05.2000
(73) Proprietor: N.T.M. S.r.l., 70025 Grumo Appula (BA) (IT)
(72) Inventor: Cavalluzzi, Raffaele, 70020 Binetto (BA) (IT)
(74) Representative: Russo, Saverio, Dott. Ing.

(56) References cited:
- EP-A- 0 062 497
- EP-A- 0 584 608
- EP-A- 0 790 121
- US-A- 5 336 358

## Description

The invention consists in a plant for the application of a rubber filler to the rubber coated metallic rings which are inserted in the tyre bead.

In order to simplify the application of the rubber filler to the rings which are inserted in the tyre bead machines which automatically provide to said operation have been realised.

Such plants present anyway some drawbacks due to the fact that it's impossible to eliminate the operators who feed the machine with metallic rings and in a second time transfer the rings with filler to the machine which inserts them in the tyres.

Furthermore, the displacement of the rubber strip of the filler presents many drawbacks, such as its difficult positioning in the machine which should applied it, and some problems connected to its cooling after it has been extruded

Document EP-0 790 121 describes 9, a plant for the production and distribution of rubber coated metallic rings with filler to the assembling unit of the tyres including a unit for automatically applying the rubber strip to form the filler and means to feed said unit, wherein the unit is fed by an apparatus furnishing the rubber coated metallic rings , and the same apparatus takes back after they have been manufactured and transfers them to a unit which transfers the rings with filler to the assembling unit of the tyres.

Main aim of the invention is to improve the production and distribution of bead rings with apex filler to the assembling unit of the tyres, by increasing the speed of feeding of the bead rings to the machine that applies the filler and of the means necessary for their transfer to the unit which has to provide to the insertion in the tyres without the use of manpower.

The plant is described in details here below, with reference to the figures of the six enclosed schemas which respectively illustrate:

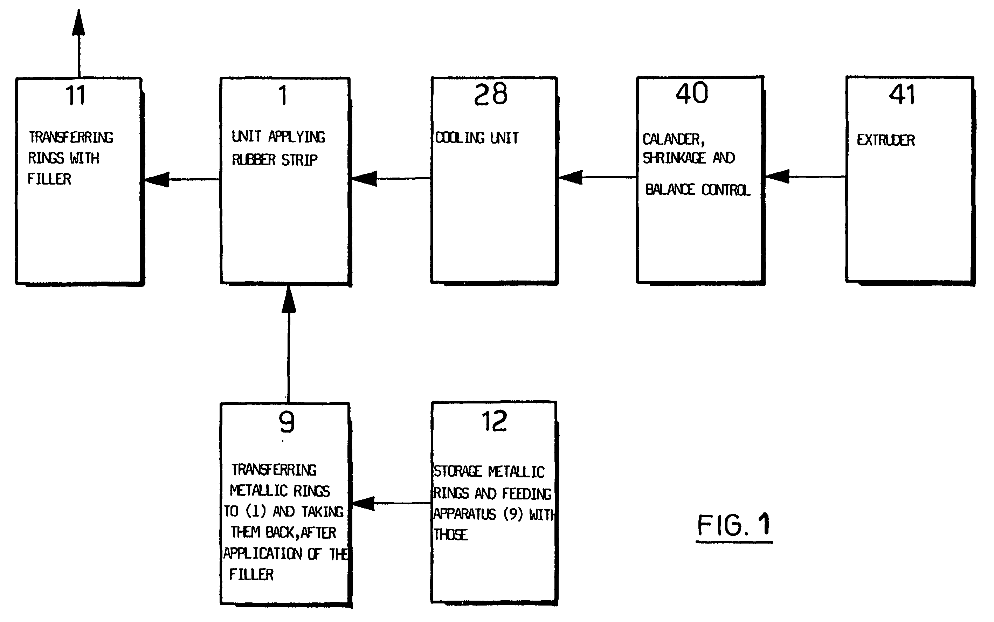

Fig. 1: Schema in blocks of the plant
Fig. 2 : General view of the plant

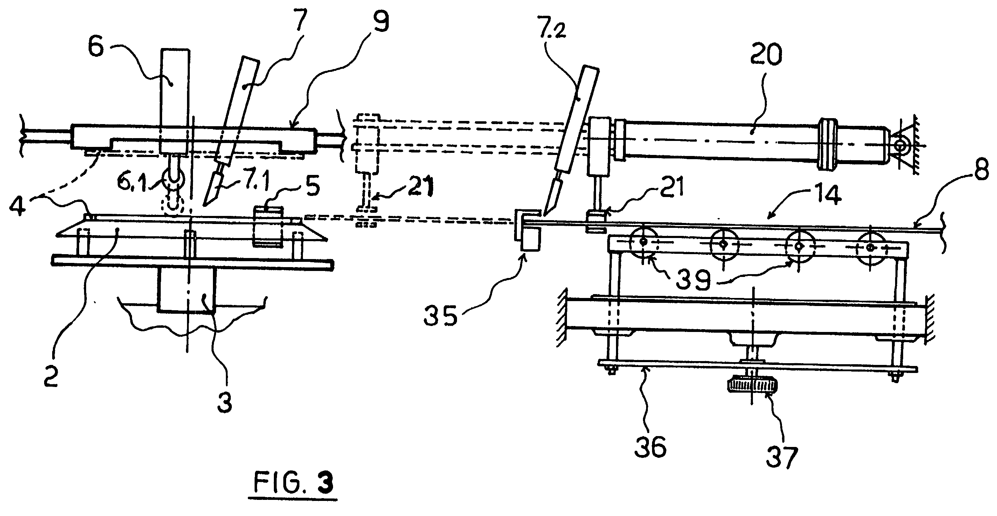

Fig. 3: schematic side view of the unit for application of rubber strip to metallic rings with device supplying and transferring metallic rings with filler to the plant that assembles tyres

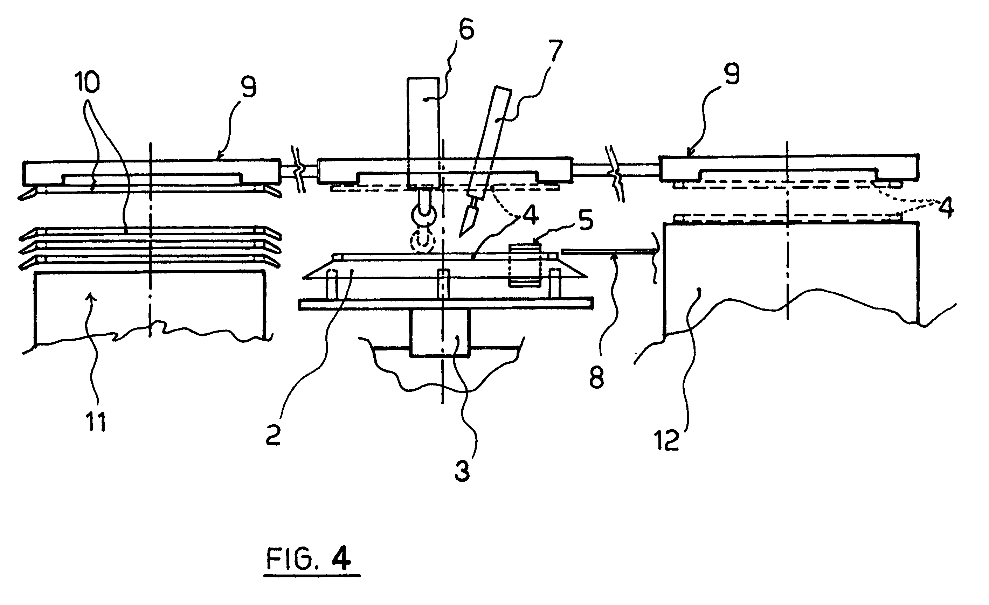

Fig. 4: schematic side view of the unit for application of rubber strip to metallic rings with device distributing metallic rings and transferring metallic rings with fillers

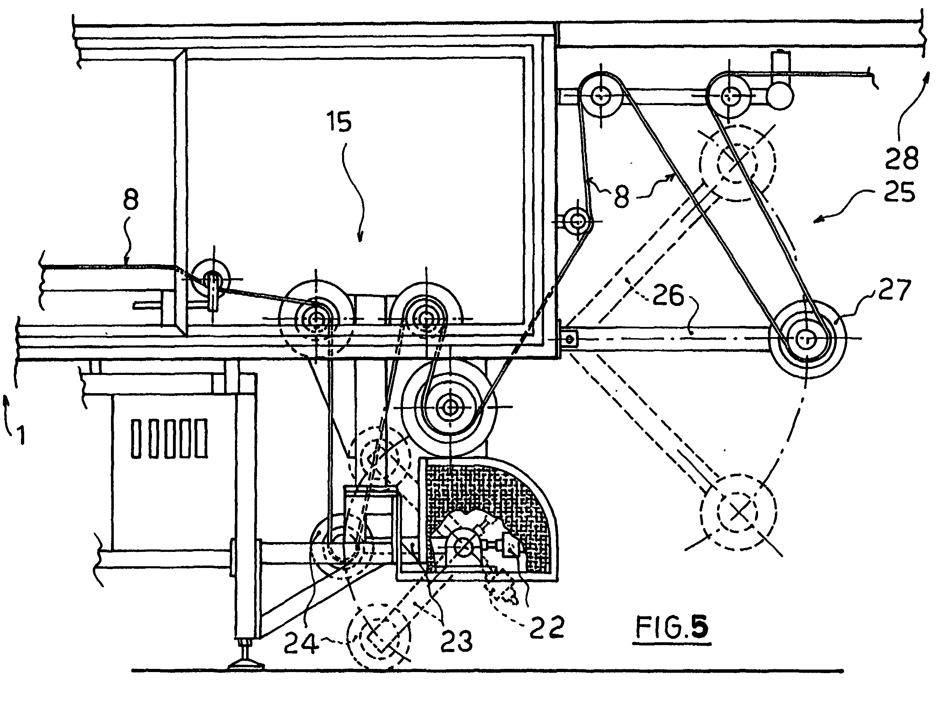

Fig. 5: side view of the stretcher group of the rubber strip

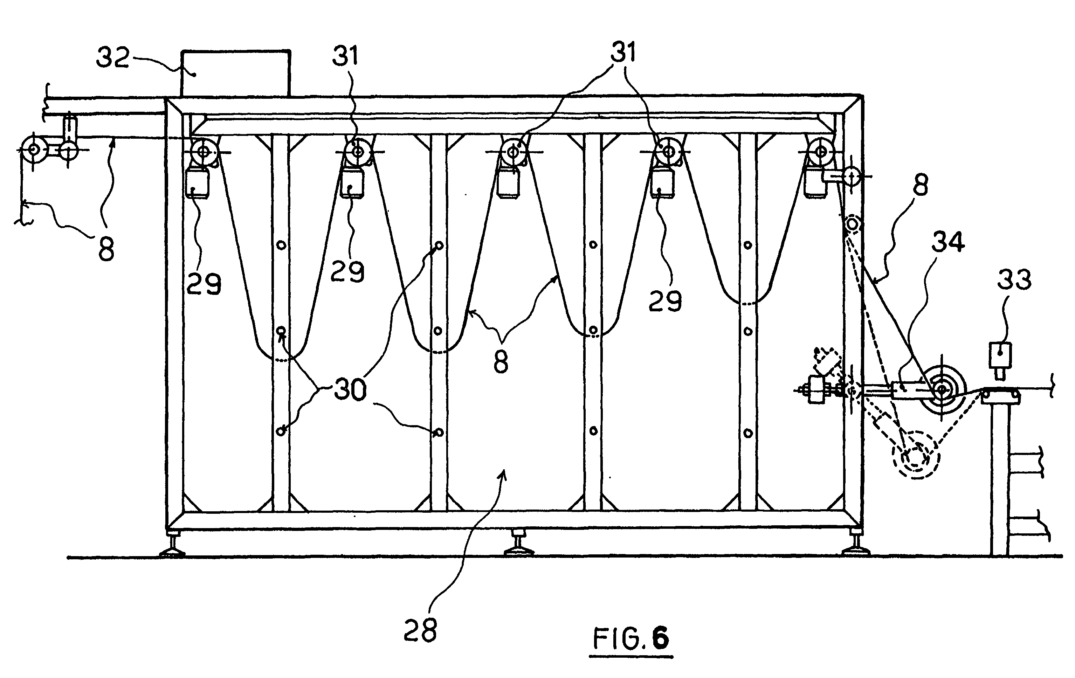

Fig. 6: side view of the cooling unit

The plant is constituted by several working units feeding a central unit 1 which applies the rubber strip to the rubber coated metallic rings 4. More particularly, it's made by means of the combination of the following parts:
a) a unit 12 for collecting and supplying rubber coated metallic rings;
b) an apparatus 9 distributing metallic rings to unit 1 and transferring metallic rings with filler from unit 1 to unit 11;
c) the units 41, 40 and 28 furnishing the rubber strip to unit 1 after having produced it;
d) a central unit 1 applying rubber strip furnished by units 41, 40 and 28 to the rubber coated metallic rings;
e) a unit 11 for transferring the rings with filler to the plant that assembles tyres.

The unit 41 consists in an extruder 41 that feeds the unit 40 including a calander with the raw strip constituting the rubber strip, from which, by means of a shrinkage conveyor, the strip is moved on to a balance, provided with a camera 33, that controls its weight.

Afterwards, the strip is transferred in a cooling unit 28 in which it moves without being subject to abnormal stress to feed an equipment that provides for the storage of the rubber strip and for the feeding of the central unit 1.

The rubber strip that goes to the central unit 1 to be applied on the rubber coated metallic ring is stretched in order to facilitate the application to the metallic ring.

The unit 1 is constituted in details by a circular rotating plate 2 on which is applied a device 3 for the rotation of the plate; the rubber coated metallic ring is mounted on the circular rotating plate, concentrically to it and locked by means of the expansion of same circular rotating plate.

By means of the transport pincer 21, the rubber strip is superimposed on the metallic ring after having received the heading cut while it's locked by the heading pincer 35.

The extremity of the rubber strip is locked by the heading pincer 35 on the circular rotating plate in contact with the metallic ring 4.

During the rotation, the pressing device 6.1 moved by piston 6 causes the sticking of the filler to the metallic ring; in a second time, by a cutter 7.1 moved by piston 7, after the locking with transport pincer 21, the posterior extremity of the filler is cut and by means of the pincer 5, said posterior extremity of the filler is put in contact with the metallic ring and with the heading of the filler.

With an ulterior rotation of the circular rotating plate, the sticking of the final portion of the filler is effectuated.

Metallic rings 4 are picked up by electromagnetic devices 16 mounted on an apparatus 9 after having been collected one by one by a hooking device 19moved by a belting 18 placed under the same apparatus 9.

Apparatus 9 collects the metallic rings exploiting their magnetism, and rotating around a vertical support 17, transports them until they are superimposed to the circular rotating plate 2.

After the application of the rubber strip 8, the apparatus 9 sucks electromagnetically by means of the above-mentioned devices 16 the metallic rings with filler 10 from the circular rotating plate 2 and, with an ulterior rotation around the rotating central support 17, transports them on a belting 11 which moves them to the assembling line of the tyres.

Each time the rotating apparatus 9 releases a metallic ring on the circular rotating plate 2, it collects a metallic ring from unit 12.

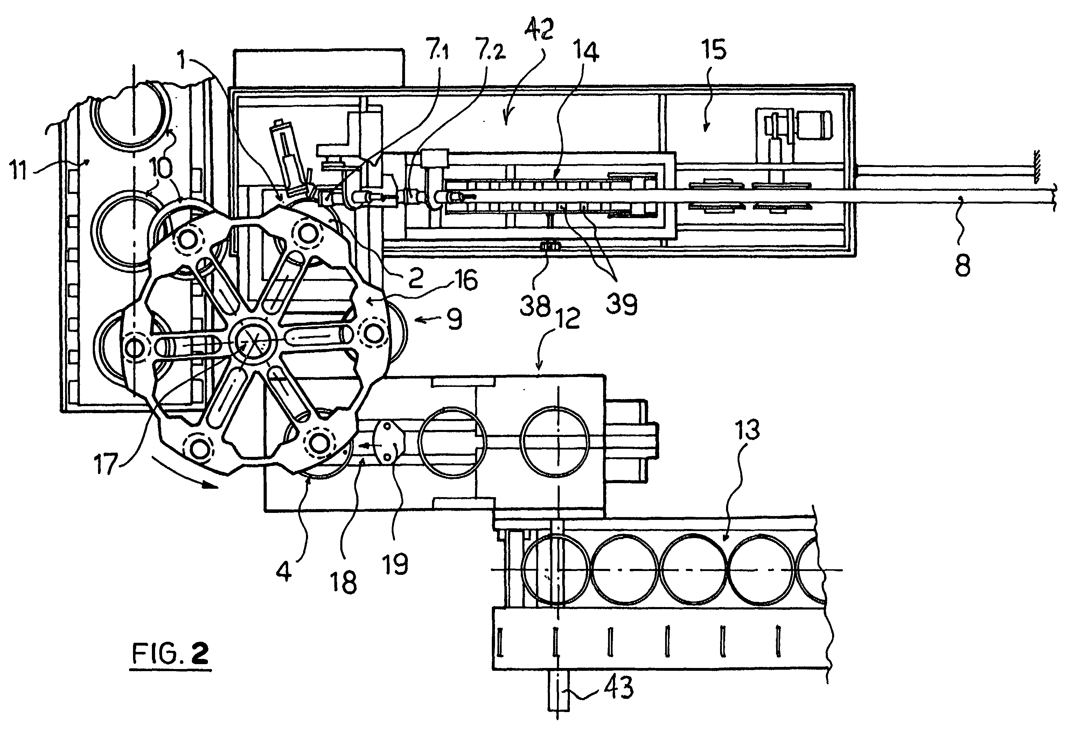

In the embodiment of figure 2, the apparatus 9 is provided with six electromagnetic devices 16 so, each time it rotates of 60°, it lifts a metallic ring from unit 12 and releases a metallic ring on the circular plate 2.

The apparatus stops during the time necessary for the application of the filler on the metallic ring, afterwards it sucks the metallic ring with filler and with an anti-clockwise rotation, it releases the metallic ring with filler on the belting 11.

Unit 13 transports the piles of metallic rings in such a position that they can be moved by a piston 43 on unit 12 on which, by further means, the pile of metallic rings is moved on the belting 18 which provides by the hooking device 19 to hook a single metallic ring per time and to move it under one of the electromagnetic devices 16 which lifts it and transports it on the circular rotating plate 2.

The rubber strip 8, before arriving to the circular plate 2, slides on a device 14 in order to be rightly positioned during the feeding of the circular plate.

Said feeding is effectuated by the transport pincer 21 which is moved by piston 20.

Device 14 is connected to a stretcher group 15 which gives the right stress to the strip by a stretching roller 24 connected to an arm 23, which is balanced by a counterweight 22.

The rubber strip is supplied by the feeding apparatus 25 that includes an arm 26 of the feeding roller 27.

In the cooling unit 28 are mounted some motors 29 which cause the rotation of rollers 31, said rollers providing to give the right stress to the rubber strip and a sufficient time of permanence in said cooling unit, causing its elongation when necessary.

At this end, in the cooling unit 28 are mounted photocells 30 that cause a variation of the speed of motors 29 applied on rollers 31, according to the position of the rubber strip (3 photocells per each vertical support).

The strip coming from stretcher 34 passes under a control camera 33 as previously mentioned; the air conditioning unit 32 provides to maintain a right degree of humidity and temperature in the cooling unit.

The positioning of the roller 39 for the sliding of the rubber strip is effectuated by means of a horizontal setting hand grip 38 and of a vertical setting hand grip 37 mounted on a mobile frame 36, which form the apparatus 42.

The plant can also be realised in different embodiments but including the basic units in order to permit its working, i.e. unit 1 which applies the filler, unit 9 which furnish the rubber coated metallic ring to unit 1 and transfers the rings with filler to unit 11, which at its turn transfers them to the assembling line of the tyres, unit 12 which collects and supplies rubber coated metallic rings and units 28, 40 and 41.

## Claims

1. Plant for the production and distribution of rubber coated metallic rings with filler to the assembling unit of the tyres including a unit (1) for automatically applying the rubber strip to form the filler and means to feed said unit and means for the transfer to the assembly unit off the tyres, **characterised, by** a circular apparatus (9) rotating stepwise, in a anticlockwise direction, on which electromagnetic devices (16) are mounted at the extremity of radial supports, that form between them an appropriate angle so that to permit, using electromagnetic attraction, the feeding from a unit (12) that furnishes said rings to same apparatus (9), that releases them on a circular rotating plate (2) mounted on the unit (1) that applies the rubber filler to the metallic rings and by the fact that, once the filler has been applied, the apparatus (9) retakes the metallic rings with apex filler from the circular rotating plate (2) and rotating in the same anticlockwise direction transports and releases them on a device (11) that, at its turn, transports the rings with filler to the assembling unit of the tyres.

2. Plant as claimed in claim 1, **characterised, by** the fact that the unit (1) forming metallic rings with apex filler is fed by an apparatus (42) which assures the right horizontal and vertical positioning of the rubber strip by means of horizontal and vertical hand grips (38) and (37) respectively and by the fact that said apparatus (42) is fed by a stretcher group (15) and a feeding apparatus (25) to insure the right stretching of the rubber strip (8) to form apex filler and the continuity of the feeding; the apparatus (15) and (25) being provided with arms (23) and (26) with rollers (24) and (27), the arm (23) being reactioned by a counterweight (22) to give the right tension to the rubber strip (8).

3. Plant as claimed in claim 1 **characterised, by** the fact that the unit (12) collecting metallic rings is connected to a feeding apparatus (13) on which are stocked piles of rubber coated metallic rings that are moved to be settled in a position in which, by means of a piston (43), they are moved on unit (12), on which, by the means of a engaging device (19) that slides under the piles of metallic rings, the lowest ring of each pile is transferred under of the electromagnetic devices (16) of the apparatus (9) which lifts the ring and transfers it on the circular rotating plate (2) of unit (1) that applies the filler.

## Patentansprüche

1. Anlage zur Erzeugung und Verteilung von gummibezogenen Metallringen mit Füller zur Montageeinheit der Reifen, umfassend eine Einheit (1) zum automatischen Aufbringen des Gummistreifens, um den Füller zu bilden, und Mittel, um die Einheit zu beschicken, und Mittel für den Transport zur Montageeinheit der Reifen, **gekennzeichnet durch** eine kreisförmige Vorrichtung (9), welche sich schrittweise in einer Richtung gegen den Uhrzeigersinn dreht und auf welcher am Rand von radialen Trägern elektromagnetische Geräte (16) angebracht sind, welche zwischen ihnen einen geeigneten Winkel bilden, so dass unter Verwendung von elektromagnetischer Anziehungskraft das Zubringen von einer Einheit (12) erlaubt wird, welche die Ringe selbiger Vorrichtung (9) zuführt, welche sie an eine kreisförmige Drehplatte (2) freigibt, welche auf der Einheit (1) angebracht ist, welche den Gummifüller auf die Metallringe aufbringt, und **durch** die Tatsache, dass die Vorrichtung (9), sobald der Füller aufgebracht ist, die Metallringe mit Wulstfüller wieder von der kreisförmigen Drehplatte (2) nimmt und sie in derselben Richtung gegen den Uhrzeigersinn drehend befördert und freigibt an ein Gerät (11), welches die Ringe mit Füller wiederum zur Montageeinheit der Reifen befördert.

2. Anlage nach Anspruch 1, **dadurch gekennzeichnet, dass** die Einheit (1), welche Metallringe mit Wulstfüller bildet, durch eine Vorrichtung (42) beschickt wird, welche die richtige horizontale und vertikale Positionierung des Gummistreifens mittels horizontaler und vertikaler Handgriffe (38) beziehungsweise (37) gewährleistet, und durch die Tatsache, dass die Vorrichtung (42) durch eine Streckvorrichtungsgruppe (15) und eine Beschickungsvorrichtung (25) beschickt wird, um das richtige Strecken des Gummistreifens (8), um den Wulstfüller zu bilden, und die Kontinuität des Beschickens sicherzustellen; wobei die Vorrichtungen (15) und (25) mit Armen (23) und (26) mit Walzen (24) und (27) versehen sind, der Arm (23) durch ein Gegengewicht (22) anspricht, um dem Gummistreifen (8) die richtige Spannung zu verleihen.

3. Anlage nach Anspruch 1, **dadurch gekennzeichnet, dass** die Einheit (12), welche Metallringe aufnimmt, mit einer Beschickungsvorrichtung (13) verbunden ist, auf welcher Stapel von gummibezogenen Metallringen vorrätig gehalten werden, welche bewegt werden, um in einer Position abgesetzt zu werden, in welcher sie mittels eines Kolbens (43) auf Einheit (12) bewegt werden, auf welcher mittels eines eingreifenden Geräts (19), das sich unter die Stapel von Metallringen schiebt, der unterste Ring von jedem Stapel unter von den elektromagnetischen Geräten (16) der Vorrichtung (9) transportiert wird, welche den Ring hebt und ihn auf der kreisförmigen Drehplatte (2) von Einheit (1), welche den Füller aufbringt, transportiert.

## Revendications

1. Installation de production et de distribution d'anneaux métalliques revêtus de caoutchouc comportant un remplissage vers l'unité de montage des pneus, comprenant une unité (1) servant à l'application automatique de la bande de caoutchouc pour former le remplissage et des moyens d'alimentation de ladite unité et des moyens de transfert des pneus vers l'unité de montage, **caractérisée par** un appareil circulaire (9) tournant par degrés dans le sens inverse des aiguilles d'une montre, sur lequel sont montés des appareillages électromagnétiques (16) à l'extrémité de supports radiaux qui forment entre eux un angle adéquat pour permettre, en utilisant l'attraction électromagnétique, l'alimentation en provenance d'une unité (12) qui fournit lesdits anneaux au dit appareil (9), qui les relâche sur une plaque rotative circulaire (2) montée sur l'unité (1) qui applique le remplissage en caoutchouc sur les anneaux métalliques, et en ce que, une fois que le remplissage a été appliqué, l'appareil (9) reprend les anneaux métalliques comportant du remplissage apex sur la plaque rotative circulaire (2) et, en tournant dans le même sens inverse des aiguilles d'une montre, les transporte et les relâche sur un appareillage (11) qui, à son tour, transporte les anneaux comportant le remplissage vers l'unité de montage des pneus.

2. Installation selon la revendication 1, **caractérisée en ce que** l'unité (1) formant des anneaux métalliques comportant un remplissage apex est alimentée par un appareil (42) qui assure le positionnement horizontal et vertical correct de la bande de caoutchouc au moyen de poignées horizontales et verticales (38) et (37) respectivement et **en ce que** ledit appareil (42) est alimenté par un groupe étireur (15) et un appareil d'alimentation (25) servant à assurer l'étirement correct de la bande en caoutchouc (8) pour former le remplissage apex et la continuité de l'alimentation ; l'appareil (15) et (25) étant pourvu de bras (23) et (26) comportant des rouleaux (24) et (27), le bras (23) étant mis en réaction au moyen d'un contrepoids (22) afin de donner la bonne tension à la bande de caoutchouc (8).

3. Installation selon la revendication 1, **caractérisée en ce que** l'unité (12) collectant les anneaux métalliques est connectée à un appareil d'alimentation (13) sur lequel sont stockées des piles d'anneaux métalliques revêtus de caoutchouc qui sont déplacées pour être mises dans une position dans laquelle elles sont, au moyen d'un piston (43), déplacées sur l'unité (12), sur laquelle, au moyen d'un appareillage d'engagement (19) qui coulisse sous les piles d'anneaux métalliques, l'anneau le plus bas de chaque pile est transféré en dessous des appareillages électromagnétiques (16) de l'appareil (9) qui soulève l'anneau et le transfère sur la plaque rotative circulaire (2) de l'unité (1) qui applique le remplissage.
